(19) Europäisches Patentamt / European Patent Office / Office européen des brevets

(11) **EP 2 711 663 B1**

(12) **FASCICULE DE BREVET EUROPEEN**

(45) Date de publication et mention
de la délivrance du brevet:
**04.11.2015 Bulletin 2015/45**

(51) Int Cl.:
***G01D 5/244*** *(2006.01)*

(21) Numéro de dépôt: **12306161.6**

(22) Date de dépôt: **25.09.2012**

(54) **Dispositif haute précision de mesure magnétique et/ou électromagnétique d'une position angulaire d'un point**

Hochpräzisionsvorrichtung zum magnetischen und/oder elektromagnetischen Messen einer Winkelposition eines Punkts

High-precision device for magnetic and/or electromagnetic measurement of an angular position of a point

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**26.03.2014 Bulletin 2014/13**

(73) Titulaire: **Vishay MCB Industrie**
**53200 Château-Gontier (FR)**

(72) Inventeurs:
• **Karciauskas, Pierre**
**53200 Chateau Gontier (FR)**
• **Bellanger, Jean-Luc**
**14170 Vendeuvre (FR)**

(74) Mandataire: **Domenego, Bertrand**
**Cabinet Lavoix**
**2, place d'Estienne d'Orves**
**75441 Paris Cedex 09 (FR)**

(56) Documents cités:
**US-A- 4 945 231**      **US-A- 5 757 180**
**US-A1- 2008 252 286**

**EP 2 711 663 B1**

## Description

La présente invention concerne un dispositif à haute précision de mesure magnétique et/ou électromagnétique d'une position angulaire. Un tel dispositif est également appelé « capteur angulaire magnétique à haute précision ».

On connaît déjà, dans l'état de la technique, par exemple d'après US 5 757 180 ou US 2008/0252286, un dispositif de mesure magnétique de la position angulaire d'un point de référence, mobile angulairement autour d'un axe, par rapport à un point d'origine fixe. Un tel dispositif de mesure comprend habituellement un disque de support, portant le point de référence, mobile en rotation autour dudit axe, et un capteur angulaire, coopérant avec au moins un élément magnétique solidaire du disque de support, pour mesurer une position angulaire du point de référence par rapport au point d'origine.

Un tel capteur angulaire est par exemple formé par un capteur du type « à effet hall 360° », ou un capteur du type « à effet hall de mesure de sinus/cosinus », ou encore par une piste potentiomètrique.

La précision d'un tel dispositif de mesure est toutefois limitée, si bien qu'elle peut être considérée comme insuffisante pour certaines applications.

L'invention a notamment pour but de remédier à cet inconvénient, en fournissant un dispositif haute précision de mesure magnétique d'une position angulaire.

A cet effet, l'invention a notamment pour objet un dispositif de mesure magnétique de la position angulaire d'un point de référence mobile angulairement autour d'un axe par rapport à un point d'origine fixe, comprenant :

- un disque de support, portant le point de référence, ledit disque de support étant mobile en rotation autour dudit axe,
- au moins un premier élément magnétique solidaire du disque de support, et
- un premier capteur de position angulaire, coopérant avec le premier élément magnétique, pour mesurer une position angulaire approximative du point de référence par rapport au point d'origine,

caractérisé en ce qu'il comporte :

- un second ensemble de seconds éléments magnétiques agencés circonférentiellement sur la périphérie du disque de support, chaque second élément magnétique s'étendant angulairement entre une extrémité amont et une extrémité aval (22B),
- au moins un second capteur magnétique, disposé au point d'origine, coopérant avec le second ensemble pour mesurer, pour un second élément magnétique situé en regard de ce second capteur, une valeur d'incrément correspondant à la position angulaire de l'extrémité amont de ce second élément magnétique par rapport au point d'origine,

- des moyens de détermination de quel second élément magnétique, parmi ceux du second ensemble, se situe en regard du second capteur, en fonction de la position angulaire approximative mesurée par le premier capteur, et
- des moyens de calcul d'une position angulaire précise du point de référence, en fonction du second élément magnétique déterminé par les moyens de détermination, et de la valeur d'incrément mesurée par le second capteur.

De manière connue en soi, le second capteur présente un nombre prédéterminé N d'incréments de mesure, répartis sur un intervalle de mesure.

Conformément à l'invention, les incréments de mesure du second capteur sont répartis sur un seul second élément magnétique, à savoir celui situé en regard de ce second capteur.

Ainsi, pour un second élément magnétique s'étendant angulairement entre une extrémité amont et une extrémité aval, le second capteur délivre une information comprise entre 0 et N, où la valeur 0 correspond à l'extrémité amont et la valeur N à l'extrémité aval du second élément magnétique.

Il apparaît clairement que, plus la dimension angulaire du second élément magnétique est réduite, plus la mesure effectuée par le second capteur est précise, puisque l'ensemble des N incréments de mesure est réparti sur cette dimension angulaire réduite. Ainsi, le second capteur fournit mesure particulièrement précise de la position de ce second élément magnétique vis-à-vis de ce capteur.

On notera que la dimension angulaire du second élément magnétique est d'autant plus réduite que ce second magnétique est disposé à la périphérie du disque de support. En effet, un tel agencement à la périphérie est celui qui permet d'agencer le plus de seconds éléments magnétiques pour couvrir les 360° du disque.

Grâce au premier capteur, il est possible de connaître quel second élément magnétique est disposé en regard du second capteur. La connaissance de ce second élément magnétique, ainsi que la connaissance de la mesure effectuée par le second capteur sur ce second élément magnétique, permettent de fournir une mesure d'angle très précise.

Un dispositif de mesure magnétique selon l'invention peut comporter en outre l'une ou plusieurs des caractéristiques suivantes, prises seules ou selon toutes combinaisons techniquement envisageables.

- Le premier élément magnétique est un disque magnétique annulaire à deux pôles magnétiques, fixé sur le disque de support, coaxialement à ce disque de support, et étant agencé radialement entre l'axe et le second ensemble de seconds éléments magnétiques.
- Le premier capteur est un capteur angulaire à effet hall 360°.

- Le premier capteur comporte quatre cellules à effet hall, dont deux cellules sont alignées avec le point d'origine le long d'un premier axe, et deux cellules sont alignées le long d'un second axe perpendiculaire au premier axe, lesdites cellules à effet hall mesurant la composante normale du champ magnétique généré par le premier élément magnétique.
- Le premier capteur est un capteur de position potentiométrique.
- Le premier capteur et/ou le second capteur est un capteur angulaire à courant de Foucault, permettant une mesure magnétique ou électromagnétique.
- Le second ensemble de seconds éléments magnétiques est formé par un disque magnétique annulaire comportant une pluralité de dipôles, par exemple 50 dipôles, chaque dipôle formant l'un desdits seconds éléments magnétiques.
- Le second capteur est un capteur magnétique à effet hall, comprenant au moins deux cellules à effet hall mesurant le champ magnétique généré par le second élément magnétique situé en regard de ce second capteur.
- Chaque second élément magnétique s'étend sur une distance angulaire prédéterminée, entre ses extrémité amont et aval, et chaque second élément magnétique est associé à un numéro d'ordre spécifique, le second élément magnétique associé au numéro d'ordre 1 présentant une extrémité amont portant le point de référence, et le numéro d'ordre étant incrémenté de proche en proche d'un second élément magnétique à son second élément magnétique adjacent aval.
- Le dispositif comporte des moyens de stockage, pour chaque numéro d'ordre, d'une valeur numérique de la distance angulaire parcourue par le point de référence par rapport au point d'origine lorsque l'extrémité amont du second élément magnétique portant ce numéro d'ordre est situé regard du point d'origine.
- Chaque second élément magnétique s'étendant sur une dimension angulaire prédéterminée, la précision du premier capteur est supérieure à la moitié de ladite dimension angulaire prédéterminée.
- Le dispositif de mesure comporte des moyens de correction de la linéarité du second capteur, propres à calculer une valeur d'incrément corrigée égale à une valeur d'incrément mesurée par le second capteur, à laquelle on soustrait une valeur de correction.
- Les moyens de correction stockent, pour chaque second élément magnétique, une fonction polynomiale qui associe une valeur de correction à une variable formée par la valeur d'incrément mesurée.
- Le dispositif de mesure comporte une pluralité de seconds capteurs, chacun disposé à un point prédéterminé, à une distance angulaire prédéterminée par rapport à l'origine.

L'invention sera mieux comprise à la lecture de la description qui va suivre, donnée uniquement à titre d'exemple et faite en se référant aux figures annexées parmi lesquelles :

- la figure 1 représente schématiquement, en vue de face, un dispositif de mesure magnétique selon un exemple de mode de réalisation de l'invention ;
- la figure 2 est un graphique représentant la mesure théorique délivrée par le second capteur en fonction de l'angle ;
- la figure 3 est un graphique représentant d'une part l'évolution d'une mesure réelle délivrée par le second capteur en fonction de l'angle ;
- la figure 4 est un graphique représentant une courbe d'erreur entre la mesure réelle de la figure 3 et la mesure théorique de la figure 2 délivrée par le second capteur en fonction de l'angle.

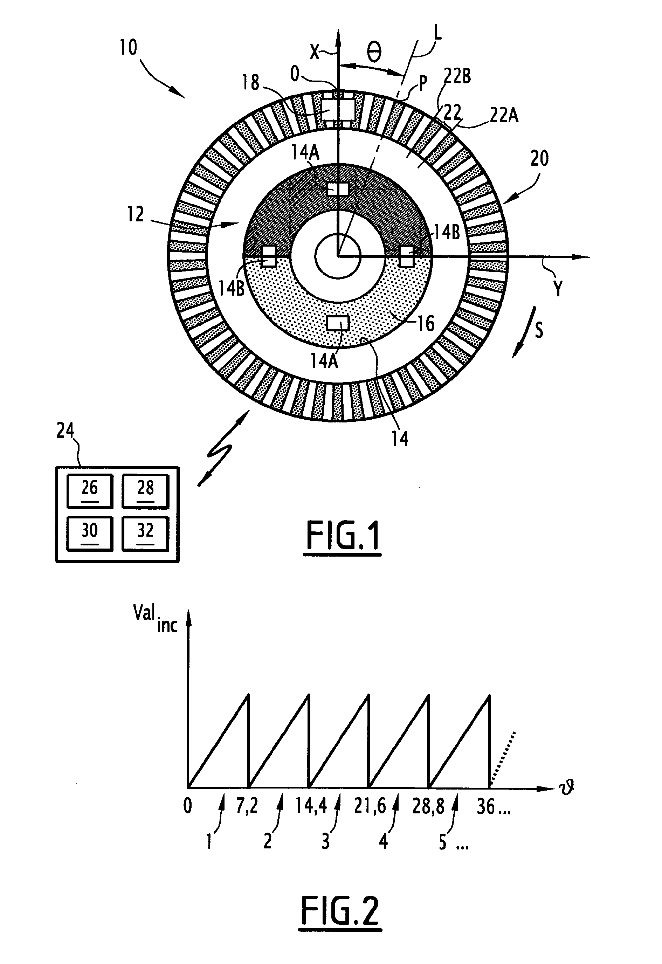

On a représenté sur la figure 1 un dispositif 10 de mesure magnétique de la position angulaire d'un point de référence P mobile angulairement, autour d'un axe Z, par rapport à un point d'origine fixe O.

Le dispositif 10 comporte un disque de support 12, portant le point de référence P. Ce disque de support 12 est mobile en rotation autour de l'axe Z, cet axe Z passant par le centre du disque 12, perpendiculairement à ce disque 12.

Dans ce qui suit, on considère, dans le plan du disque 12, un repère XY formé par un premier axe X perpendiculaire à l'axe Z et passant par le point d'origine O, et un second axe Y, perpendiculaire à l'axe Z et au premier axe X.

On considère par ailleurs une ligne L dans le repère XY, perpendiculaire à l'axe Z et passant par le point de référence P.

Le dispositif de mesure angulaire 10 est destiné à mesurer un angle précis $\theta$ entre le premier axe X et la ligne L. Cet angle $\theta$ correspond également à une distance angulaire précise entre le point d'origine fixe O et le point de référence mobile P.

Le dispositif de mesure 10 comporte un premier capteur de position 14, coopérant avec au moins un premier élément magnétique 16, solidaire du disque de support 12, pour mesurer une position angulaire approximative $\theta_a$ du point de référence P par rapport au point d'origine O.

Dans l'exemple représenté, où on cherche à mesurer un angle entre 0 et 360°, le premier élément magnétique 16 est un disque magnétique annulaire à deux pôles magnétiques, fixé sur une partie intérieure du disque de support 12, coaxialement à ce disque de support 12.

En variante, notamment dans le cas d'une étendue de mesure réduite sur un secteur de 180° ou 90° par exemple, on peut prévoir un disque magnétique 16 comportant 4 pôles (pour l'étendue de mesure de 180°) ou 8 pôles (pour l'étendue de mesure de 90°). Dans ce cas, il convient d'adapter le nombre de premiers capteurs 14 (en doublant ou quadruplant ce nombre). Cette variante permet de créer une redondance, et ainsi d'augmenter la fiabilité de la mesure pour certaines applications.

Le premier capteur 14 est par exemple du type « capteur à effet hall de mesure de sinus et de cosinus ». Un tel capteur, connu en soi, comporte deux premières cellules à effet hall 14A alignées avec le point d'origine O le long du premier axe X, et deux secondes cellules à effet hall 14B alignées le long du second axe Y. Ces cellules à effet hall 14A, 14B mesurent la composante normale du champ magnétique généré par le premier élément magnétique 16, afin d'en déduire un cosinus et un sinus de l'angle d'orientation de ce champ magnétique par rapport au premier axe X.

Ce sinus et ce cosinus permettent de calculer la tangente de l'angle, dont un calcul d'arc tangente permet de remonter à la valeur approximative $\theta_a$ de la position angulaire approximative du point de référence P.

Le dispositif de mesure magnétique 10 comporte par ailleurs un second capteur 18, formé par un capteur magnétique linéaire, disposé au point d'origine O. Ce second capteur 18 coopère avec un second ensemble 20 de seconds éléments magnétiques 22 agencés circonférentiellement sur une partie extérieure du disque de support 12, plus précisément sur la périphérie du disque de support 12. Ainsi, le premier disque magnétique annulaire 16 est agencé radialement entre l'axe Z du disque de support 12 et le second ensemble 20 de seconds éléments magnétiques 22.

Le second capteur magnétique 18 est propre à mesurer, pour un second élément magnétique 22 situé en regard de ce second capteur magnétique 18, quelle est la proportion de ce second élément magnétique 22 qui est avancée au-delà du point d'origine O.

Dans l'exemple décrit, le second ensemble 20 de seconds éléments magnétiques 22 est formé par un disque magnétique annulaire comportant une pluralité de dipôles, chaque dipôle formant l'un desdits seconds éléments magnétiques 22. Par exemple, le disque magnétique annulaire 20 comporte cinquante dipôles 22.

Dans l'exemple décrit, le disque magnétique 20 est fixé sur la surface du disque de support 12. En variante, les éléments magnétiques 22 pourraient être fixés sur la tranche du disque de support 12.

Chaque dipôle 22 s'étend angulairement entre une extrémité amont 22A et une extrémité aval 22B. Les termes « amont » et « aval » sont considérés en fonction du sens de rotation S du disque 12.

Le second capteur magnétique 18 présente un nombre N prédéterminé d'incréments de mesure, et délivre donc une information numérique comprise dans un intervalle entre 0 et le nombre d'incréments N.

Par exemple, le second capteur magnétique 18 peut être formé par un capteur linéaire délivrant un signal analogique, ce capteur étant associé à un convertisseur analogique/numérique pour convertir le signal analogique en un signal numérique délivrant une information comprise dans l'intervalle entre 0 et N.

Cet intervalle entre 0 et N est réparti sur toute la dimension angulaire du dipôle 22 disposé en regard du second capteur magnétique 18. Ainsi, le second capteur magnétique 18 délivre la valeur 0 lorsque l'extrémité amont 22A du dipôle 22 est en regard du point d'origine O, et délivre la valeur N lorsque l'extrémité aval 22B du dipôle 22 est en regard du point d'origine O. Chaque incrément de mesure dans l'intervalle [0 ; N] correspond donc à une mesure précise de la position angulaire de l'extrémité amont 22A du dipôle 22 par rapport au point d'origine O.

On notera que, plus la dimension angulaire du dipôle 22 est réduite, plus les incréments de mesure sont proches les uns des autres, puisque l'intégralité de l'intervalle [0 ; N] est répartie sur cette dimension angulaire. En d'autres termes, la mesure est plus précise lorsque la dimension angulaire du dipôle 22 est réduite.

Ainsi, pour une distance angulaire totale de mesure donnée (généralement 360°), la précision de la mesure obtenue par le second capteur magnétique 18 augmente avec le nombre de dipôles 22 répartis sur cette distance angulaire totale de mesure.

En particulier, il est particulièrement avantageux d'agencer les dipôles 22 à la périphérie extérieure du disque de support 12, car cela permet d'agencer un maximum de dipôles 22 sur la distance angulaire totale de mesure. Ainsi, puisque le nombre de dipôles 22 est maximal, la distance angulaire couverte par chaque dipôle 22 est minimale, donc la précision de la mesure obtenue par le second capteur magnétique 18 est optimale.

Dans l'exemple décrit, le second capteur 18 est un capteur magnétique à effet hall, comprenant au moins deux cellules à effet hall mesurant le champ magnétique généré par le dipôle 22 situé en regard de ce second capteur 18. Par exemple, ce second capteur 18 est du type désigné par la référence AS5311, commercialisé par Austria Microsystems. Un tel second capteur 18 délivre une information en décimal sur 12 bits, sur un intervalle allant de 0 à N = 4095.

On notera que la mesure obtenue par le second capteur 18 peut aisément être convertie en une proportion, notamment un pourcentage, en divisant cette mesure par la mesure maximale, par exemple 4095 pour un capteur AS5311. Ainsi, le second capteur 18 permet notamment de mesurer la proportion du second élément magnétique 22 qui s'étend au-delà du point d'origine O.

Afin de déterminer quelle est la position angulaire $\theta$ précise du point P à partir des mesures des premier 14 et second 18 capteurs, le dispositif de mesure 10 comporte une unité informatique 24 communiquant avec chacun de ces premier 14 et second 18 capteurs.

L'unité informatique 24 peut être formée par un microcontrôleur, un processeur, un circuit logique programmable du type FGPA (acronyme anglais pour Field-Programmable Gate Array) ou EPLD (acronyme anglais pour Erasable Programmable logic device), ou tout autre type d'unité informatique adapté.

L'unité de calcul 24 comporte des moyens 26 de détermination de quel dipôle 22, parmi ceux du second ensemble 20, se situe en regard du second capteur 18, en fonction de la position angulaire approximative $\theta_a$ mesurée par le premier capteur 14. Dans ce qui suit, le dipôle 22 situé en regard du second capteur 18 est dit « dipôle actif ».

Chaque dipôle 22 est associé à un numéro d'ordre spécifique. En particulier, le dipôle 22 associé au numéro d'ordre 1 est celui dont l'extrémité amont 22A porte le point de référence P, et le numéro d'ordre est incrémenté de proche en proche d'un dipôle 22 à son dipôle adjacent aval, dans un sens opposé au sens de rotation S du disque de support 12.

L'unité informatique 24 comporte des moyens de stockage 28, pour chaque numéro d'ordre, d'une valeur numérique de la distance parcourue par le point de référence P par rapport au point d'origine O lorsque l'extrémité amont 22A du dipôle 22 portant ce numéro d'ordre est situé en regard du point d'origine 0, c'est-à-dire en regard du second magnétique 18. Cette distance, pour chaque numéro d'ordre, correspond à la somme des dimensions angulaires des dipôles 22 présentant des numéros d'ordre strictement inférieurs.

La dimension angulaire de chaque dipôle 22 peut être obtenue expérimentalement, en mesurant avec le premier capteur 14 la valeur de l'angle chaque fois que le second capteur magnétique 18 délivre une mesure de zéro, c'est-à-dire chaque fois qu'une extrémité d'un dipôles 22 passe devant le second capteur 18. Ces mesures sont de préférence effectuées plusieurs fois, afin d'en effectuer des moyennes pour compenser le manque de précision du premier capteur 14.

En variante, les dimensions angulaires des dipôles 22 peuvent être estimées par calcul, en divisant 360° par le nombre de dipôles 22. Par exemple, lorsque le second ensemble 20 comporte cinquante dipôles 22, la dimension angulaire de chacun de ces dipôles est sensiblement égale à 7,2°.

Enfin, l'unité informatique 24 comporte des moyens de calculs 30 appropriés pour calculer une position précise du point de référence P, en fonction du dipôle actif 22 déterminé par les moyens de détermination 26, et de la mesure effectuée par le second capteur 18.

On a représenté, sur la figure 2, les mesures Val_inc obtenues par le second capteur 18, rapportées sous forme de pourcentage, en fonction de l'angle $\theta$ parcouru par le point de référence P. Ce graphique est obtenu pour un capteur linéaire idéal. Ainsi, la courbe représentée évolue en dents de scie, en passant par zéro à chaque changement de dipôle et en évoluant linéairement en fonction de l'angle $\theta$ pour un dipôle 22 donné.

Le dispositif 10 de mesure décrit précédemment permet d'effectuer un procédé de mesure magnétique de la position angulaire $\theta$ du point de référence P par rapport au point d'origine fixe O.

Ce procédé comporte une première étape de mesure, par le premier capteur 14, d'une position angulaire approximative $\theta_a$ du point de référence P par rapport au point d'origine O. Cette étape de mesure est réalisée de manière connue en soi par le premier capteur 14, qui est de type classique.

Le procédé comporte ensuite une étape de détermination, par les moyens de détermination 26, de quel dipôle 22, parmi ceux du second ensemble 20, est le dipôle actif, en fonction de la position angulaire approximative $\theta_a$ mesurée par le premier capteur 14.

Le procédé comporte ensuite une seconde étape de mesure, par le second capteur 18, de la position angulaire de l'extrémité amont 22A du dipôle actif par rapport au point d'origine O. Cette position angulaire peut être fournie sous la forme d'une valeur d'incrément (notée Val_inc ci-dessous), ou sous la forme d'un pourcentage. La Valeur d'incrément Val_inc est un nombre compris entre 0 et N, comme indiqué précédemment, où N = 4095 dans le cas du capteur AS5311. Le pourcentage est obtenu en divisant la valeur d'incrément mesurée par N.

Enfin, grâce aux moyens de calculs 30 appropriés, le procédé comporte une étape de calcul d'une position angulaire précise $\theta$ du point de référence P, en fonction du dipôle actif 22 déterminé par les moyens de détermination 26, et de la mesure Val_inc fournie par le second capteur 18.

Un exemple de mesure précise d'une position angulaire du point de référence P sera décrit ci-dessous.

Au cours de la première étape de mesure, le premier capteur 14 mesure par exemple une position approximative $\theta_a$ = 25°.

Les moyens de détermination 26 comparent cette position approximative $\theta_a$ avec les données stockées dans les moyens de stockage 28, afin d'en déduire le numéro d'ordre du dipôle actif 22, qui est situé en regard du second capteur magnétique 18 lorsque la position angulaire du point de référence P est égale à 25°.

Dans l'exemple où les dipôles 22 présentent tous une dimension angulaire identique, le dipôle 22 de numéro d'ordre 1 s'étend dans un intervalle angulaire entre 0 et 7,2°, le dipôle 22 de numéro d'ordre 2 s'étend dans un intervalle angulaire entre 7,2° et 14,4°, le dipôle 22 de numéro d'ordre 3 s'étend dans un intervalle angulaire entre 14,4° et 21,6°, le dipôle 22 de numéro d'ordre 4 s'étend dans un intervalle angulaire entre 21,6° et 28,8°, etc. (les angles entre lesquels s'étendent les autres dipôles de numéros d'ordre 5 à 50 étant déterminés de manière similaire).

Puisque la position approximative $\theta_a$ mesurée est égale à 25°, celle-ci se situe entre 21,6° et 28,8°, et si bien que les moyens de détermination déterminent que le dipôle 22 actif est le dipôle 22 de numéro d'ordre 4. Ce numéro d'ordre peut également être obtenu en prenant l'arrondi supérieur de $\theta_a$ divisé par la dimension angulaire de chaque dipôle 22 (ou la moyenne des dimensions angulaires de ces dipôles 22), soit 7,2° dans l'exemple décrit. Cet arrondi supérieur peut par exemple être obtenu par la partie entière de cette division, à laquelle on ajoute 1.

Au cours de la seconde étape de mesure, le second capteur 18 mesure par exemple une valeur d'incrément Val_inc = 1852, c'est-à-dire une proportion du dipôle de numéro d'ordre 4 avançant au-delà du point d'origine égale à 45,22 % (1852ème incrément sur les 4095 incréments de mesure).

Or, pour ce dipôle 22 de numéro d'ordre 4, une proportion de 0 % correspond à l'angle de 21,6° et une proportion de 100 % correspond à l'angle de 28,8° (voir la figure 2). Les moyens de calcul 30 peuvent donc aisément déterminer la position précise du point de référence P, à savoir : θ = 21,6 + (28,8 - 21,6) x 45,22/100 = 24,85°

On réalise ainsi une mesure précise de la position angulaire θ du point de référence P par rapport au point d'origine O.

Dans l'exemple ci-dessus, on a considéré que les premier 14 et second 18 capteurs délivrent des mesures exactes. En pratique, ces premier 14 et second 18 capteurs présentent des incertitudes, qu'il convient de prendre en compte pour optimiser la précision de la position angulaire 9 mesurée.

On décrira ci-dessous un exemple de méthode pour compenser les incertitudes du premier capteur 14, puis des exemples de méthodes de compensation des erreurs du second capteur 18.

Le problème lié aux incertitudes du premier capteur 14 consiste en ce que deux dipôles 22 adjacents pourraient être considérés comme étant le dipôle actif, notamment dans le cas où un intervalle d'incertitude entourant la position angulaire approximative θ_a recoupe les intervalles angulaires dans lesquels s'étendent deux dipôles adjacents.

Dans ce qui suit, on désignera :

- la tolérance d'incertitude sur la mesure du premier capteur 14 par « Tol » ;
- le numéro d'ordre d'un dipôle par « n »,
- l'angle auquel se trouve l'extrémité aval du dipôle n, également appelé « Seuil aval », par « Sn », et l'angle auquel se trouve l'extrémité amont du dipôle n, également appelé « Seuil amont », par « Sn-1 »,
- la dimension angulaire de chaque dipôle 22, ou la moyenne des dimensions angulaires des dipôles 22, par « D ». Dans l'exemple décrit, D=7,2°

Une méthode pour déterminer quel est le dipôle actif malgré les incertitudes du premier capteur est la suivante. Cette méthode fait suite à la première étape de mesure de la position angulaire approximative θ_a par le premier capteur 14, et de la seconde étape de mesure de la valeur d'incrément « Val_inc » par le second capteur 18.

Au cours d'une première étape, on considère le dipôle dont le numéro d'ordre est l'arrondi supérieur de θ_a divisé par la dimension angulaire D de chaque dipôle 22 (ou la moyenne des dimensions angulaires de ces dipôles 22), soit 7,2 dans l'exemple décrit. Cet arrondi supérieur peut par exemple être obtenu par la partie entière de cette division, à laquelle on ajoute 1.

Le résultat obtenu est le numéro d'ordre du dipôle 22 qui serait le dipôle actif si le premier capteur 14 ne présentait pas d'incertitude, comme dans l'exemple décrit précédemment.

Du fait de l'incertitude, il est nécessaire de vérifier si le dipôle ainsi considéré est effectivement le dipôle actif, ou si c'est un dipôle adjacent qui est le dipôle actif.

Par exemple, dans l'exemple précédent, où la position approximative θ_a mesurée est égale à 25°, en considérant une incertitude de 3,5°, l'intervalle d'incertitude autour de la position approximative θ_a est [21,5 ; 28,5]. Le dipôle 22 actif pourrait donc être le dipôle de numéro d'ordre 3 (entre 14,4° et 21,6°), ou le dipôle de numéro d'ordre 4 (entre 21,6° et 28,8°). En effet, il est possible que, du fait de l'incertitude, l'angle θ précis soit 21,5°, donc dans l'intervalle du dipôle de numéro d'ordre 3.

Au cours d'une seconde étape de la méthode de compensation, on vérifie si la position approximative θ_a se trouve autour du seuil aval Sn du dipôle n considéré, notamment dans l'intervalle [$S_n$ - *Tol*;$S_n$ + *Tol*]. Si tel est le cas, alors l'angle réel peut se trouver en deçà du seuil Sn (donc sur le dipôle d'ordre n), ou au-delà de ce seuil Sn (donc sur le dipôle d'ordre n+1).

Dans ce cas, si la valeur d'incrément Val_inc est comprise entre 0 et $\dfrac{Tol}{D} \times N$ , cela signifie que l'angle se trouve dans une partie amont d'un dipôle, donc que le dipôle actif est le dipôle de numéro d'ordre n+1.

En revanche, si la valeur d'incrément Val_inc est comprise entre $N - \dfrac{Tol}{D} \times N$ et *N* , cela signifie que l'angle se trouve dans une partie aval d'un dipôle, donc que le dipôle actif est le dipôle de numéro d'ordre n.

Dans le cas où la position approximative θ_a ne se trouve pas autour du seuil aval Sn du dipôle n considéré, on vérifie au cours d'une troisième étape si la position approximative θ_a se trouve autour du seuil amont Sn-1 du dipôle n considéré, notamment dans l'intervalle [$S_{n-1}$ - *Tol*;$S_{n-1}$ + *Tol*]. Si tel est le cas, alors l'angle réel peut se trouver en deçà du seuil Sn-1 (donc sur le dipôle d'ordre n-1), ou au-delà de ce seuil Sn-1 (donc sur le dipôle d'ordre n).

Dans ce cas, si la valeur d'incrément Val_inc est comprise entre 0 et $\dfrac{Tol}{D} \times N$ , cela signifie que l'angle se trouve dans une partie amont d'un dipôle, donc que le dipôle actif est le dipôle de numéro d'ordre n.

En revanche, si la valeur d'incrément Val_inc est comprise entre $N - \dfrac{Tol}{D} \times N$ et $N$, cela signifie que l'angle se trouve dans une partie aval d'un dipôle, donc que le dipôle actif est le dipôle de numéro d'ordre n-1.

Ainsi, grâce à cette méthode, il est possible de déterminer quel est le dipôle actif malgré les incertitudes du premier capteur 14. On notera que d'autres méthodes pour déterminer le dipôle actif pourraient être envisagées.

Pour une efficacité optimale, la précision du premier capteur 14 est de préférence supérieure à la moitié de la dimension angulaire de chacun des dipôles 22, c'est-à-dire que $Tol \leq \dfrac{D}{2}$. Par exemple, on choisira un premier capteur dont l'incertitude est égale à 2,5°.

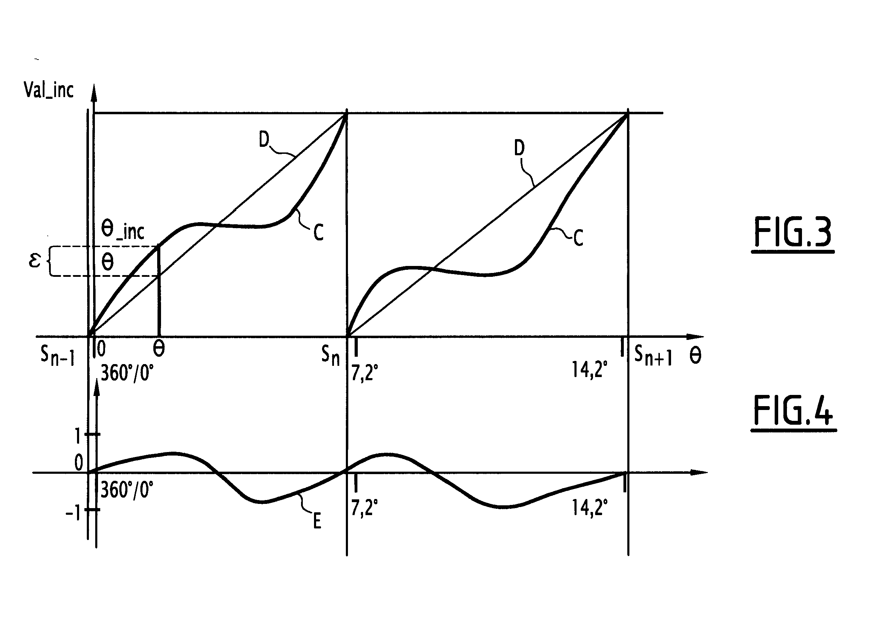

Comme indiqué précédemment, le second capteur 18 présente également des incertitudes de mesure. En effet, en pratique, la courbe de sortie des valeurs mesurées par le second capteur 18, en fonction de l'angle parcouru, peut ne pas présenter la forme d'une droite, comme cela est représenté sur la figure 3.

Ainsi, pour une précision optimale, il est préférable de corriger la linéarité du second capteur 18. A cet effet, le dispositif de mesure 10 comporte des moyens 32 de correction de la linéarité de ce second capteur 18.

Les erreurs de linéarité du second capteur 18 sont dues principalement au disque magnétique 20, à la dispersion de la période magnétique des dipôles 22, et aux imperfections de magnétisation de chacun des dipôles 22.

On a représenté, sur la figure 3, une courbe C représentant une courbe réelle de sortie du second capteur 18 pour les dipôles 22 de numéros d'ordre 1 et 2. On a également représenté des segments de droite D, représentant les courbes idéales de sortie d'un second capteur 18 parfaitement linéaire.

Par ailleurs, on a représenté, sur la figure 4, une courbe E représentant les erreurs du second capteur 18 pour les dipôles 22 de numéros d'ordre 1 et 2. Cette courbe E correspond à la différence entre la courbe C et la courbe formée par les segments de droite D.

Afin d'obtenir une valeur précise d'une mesure effectuée par le second capteur angulaire 18, il est nécessaire d'en soustraire une valeur de correction, correspondant à l'erreur pour la mesure effectuée.

Pour ce faire, une première méthode consiste à stocker, pour chaque dipôle et pour chaque incrément de mesure, la valeur de l'erreur à cet incrément de mesure. Cette méthode nécessite toutefois beaucoup de mémoire, notamment dans le cas où le nombre d'incréments de mesure du second capteur 18 est élevé (par exemple 4096 pour le capteur AS5311).

Ainsi, on prévoit une seconde méthode nécessitant moins de mémoire, consistant à approximer la courbe d'erreur E par un polynôme, par exemple un polynôme d'ordre 6. Dans ce cas, chaque dipôle 22 dispose d'un polynôme de correction, défini par un ensemble de 6 coefficients. Ainsi, cette fonction polynomiale associe une valeur de correction à une variable formée par la valeur d'incrément mesurée. Cette méthode permet de ne stocker que 6 coefficients par dipôle, plutôt que d'en stocker 4096 comme dans la première méthode.

On notera que la courbe d'erreur E est obtenue de manière expérimentale, et que les coefficients des polynômes sont obtenus par une méthode classique d'approximation d'une courbe par un polynôme.

On notera que l'invention n'est pas limitée au mode de réalisation précédemment décrit, mais pourrait présenter diverses variantes sans sortir du cadre des revendications.

Par exemple, le premier capteur 14 pourrait être formé par un capteur angulaire à effet hall sur 360°, un capteur de position potentiométrique, ou encore par un capteur angulaire à courant de Foucault, permettant une mesure magnétique ou électromagnétique.

Par ailleurs, les cellules à effet Hall du premier 14 ou du second 18 capteur pourraient être remplacée par des cellules passives utilisant une technologie MagnétoRésistive, notamment du type AMR, TMR et/ou GMR, ou tout autre type de cellule adaptée.

Conformément à une autre variante, le dispositif de mesure comporte une pluralité de seconds capteurs, chacun disposé à un point prédéterminé, à une distance angulaire prédéterminée par rapport à l'origine O. Chacun de ces seconds capteurs fonctionne alors de la même manière que celui décrit précédemment, en fournissant, pour un second élément magnétique 22 situé en regard de ce second capteur, une valeur d'incrément correspondant à la position angulaire de l'extrémité amont 22A de ce second élément magnétique 22 par rapport au point auquel est disposé ce second capteur.

Connaissant la position angulaire du point prédéterminé par rapport au point d'origine O, il est ainsi possible de déduire, pour chaque second capteur, une valeur de la distance angulaire entre le point de référence P et le point d'origine O. En calculant alors une moyenne de l'ensemble des valeurs ainsi obtenues par l'ensemble des seconds capteurs, on obtient une valeur moyenne de ladite distance angulaire, ce qui permet de lisser les éventuelles incertitudes de chaque second capteur.

Grâce à ce lissage des incertitudes, la correction des valeurs obtenues par les seconds capteurs peut être réalisée par un polynôme de correction d'ordre inférieur à celui décrit précédemment, tout en conservant une efficacité satisfaisante de la correction. L'utilisation d'un tel polynôme d'ordre inférieur permet notamment de réduire le temps de calcul pour la correction.

**Revendications**

1. Dispositif (10) de mesure magnétique de la position angulaire d'un point de référence (P) mobile angulairement autour d'un axe (Z) par rapport à un point d'origine (O) fixe, comprenant :

- un disque de support (12), portant le point de référence (P), ledit disque de support (12) étant mobile en rotation autour dudit axe (Z),
- au moins un premier élément magnétique (16) solidaire du disque de support (12), et
- un premier capteur de position angulaire (14), coopérant avec le premier élément magnétique (16), pour mesurer une position angulaire approximative ($\theta_a$) du point de référence (P) par rapport au point d'origine (O),

**caractérisé en ce qu'**il comporte :

- un second ensemble (20) de seconds éléments magnétiques (22) agencés circonférentiellement sur la périphérie du disque de support (12), chaque second élément magnétique (22) s'étendant angulairement entre une extrémité amont (22A) et une extrémité aval (22B),
- au moins un second capteur (18) magnétique, disposé au point d'origine (O), coopérant avec le second ensemble (20) pour mesurer, pour un second élément magnétique (22) situé en regard de ce second capteur (18), une valeur d'incrément correspondant à la position angulaire de l'extrémité amont (22A) de ce second élément magnétique (22) par rapport au point d'origine (O),
- des moyens (26) de détermination de quel second élément magnétique (22), parmi ceux du second ensemble (20), se situe en regard du second capteur (18), en fonction de la position angulaire approximative ($\theta_a$) mesurée par le premier capteur (14), et
- des moyens (30) de calcul d'une position angulaire précise ($\theta$) du point de référence (P), en fonction du second élément magnétique (22) déterminé par les moyens de détermination, et de la valeur d'incrément mesurée par le second capteur (18).

2. Dispositif de mesure (10) selon la revendication 1, dans lequel le premier élément magnétique (16) est un disque magnétique annulaire à deux pôles magnétiques, fixé sur le disque de support (12), coaxialement à ce disque de support (12), et étant agencé radialement entre l'axe (Z) et le second ensemble (20) de seconds éléments magnétiques (22).

3. Dispositif de mesure (10) selon la revendication 1 ou 2, dans lequel le premier capteur (14) est un capteur angulaire à effet hall 360°.

4. Dispositif de mesure (10) selon la revendication 1 ou 2, dans lequel le premier capteur (14) comporte quatre cellules (14A, 14B) à effet hall, dont deux cellules (14A) sont alignées avec le point d'origine (O) le long d'un premier axe (X), et deux cellules (14B) sont alignées le long d'un second axe (Y) perpendiculaire au premier axe (X), lesdites cellules à effet hall mesurant la composante normale du champ magnétique généré par le premier élément magnétique (16).

5. Dispositif de mesure (10) selon la revendication 1 ou 2, dans lequel le premier capteur (14) est un capteur de position potentiométrique.

6. Dispositif de mesure (10) selon la revendication 1 ou 2, dans lequel le premier capteur (14) et/ou le second capteur (18) est un capteur angulaire à courant de Foucault, permettant une mesure magnétique ou électromagnétique.

7. Dispositif de mesure (10) selon l'une quelconque des revendications précédentes, dans lequel le second ensemble (20) de seconds éléments magnétiques (22) est formé par un disque magnétique annulaire comportant une pluralité de dipôles, par exemple 50 dipôles, chaque dipôle formant l'un desdits seconds éléments magnétiques (22).

8. Dispositif de mesure (10) selon l'une quelconque des revendications précédentes, dans lequel le second capteur (18) est un capteur magnétique à effet hall, comprenant au moins deux cellules à effet hall mesurant le champ magnétique généré par le second élément magnétique (22) situé en regard de ce second capteur (18).

9. Dispositif de mesure (10) selon l'une quelconque des revendications précédentes, dans lequel :

- chaque second élément magnétique (22) s'étend sur une distance angulaire (D) prédéterminée, entre ses extrémité amont (22A) et aval (22B),
- chaque second élément magnétique (22) est associé à un numéro d'ordre spécifique, le second élément magnétique associé au numéro d'ordre 1 présentant une extrémité amont portant le point de référence (P), et le numéro d'ordre étant incrémenté de proche en proche d'un second élément magnétique à son second élément magnétique adjacent aval,
- le dispositif (10) comporte des moyens (28) de stockage, pour chaque numéro d'ordre, d'une valeur numérique de la distance angulaire parcourue par le point de référence (P) par rapport au point d'origine (O) lorsque l'extrémité amont (22A) du second élément magnétique (22) portant ce numéro d'ordre est situé regard du point d'origine (O).

**10.** Dispositif de mesure (10) selon l'une quelconque des revendications précédentes, dans lequel, chaque second élément magnétique (22) s'étendant sur une dimension angulaire (D) prédéterminée, la précision du premier capteur est supérieure à la moitié de ladite dimension angulaire prédéterminée (D).

**11.** Dispositif de mesure (10) selon l'une quelconque des revendications précédentes, comportant des moyens (32) de correction de la linéarité du second capteur (18), propres à calculer une valeur d'incrément corrigée égale à une valeur d'incrément mesurée par le second capteur (18), à laquelle on soustrait une valeur de correction.

**12.** Dispositif de mesure (10) selon la revendication 11, dans lequel les moyens de correction (32) stockent, pour chaque second élément magnétique (22), une fonction polynomiale qui associe une valeur de correction à une variable formée par la valeur d'incrément mesurée.

**13.** Dispositif de mesure (10) selon l'une quelconque des revendications précédentes, comportant une pluralité de seconds capteurs, chacun disposé à un point prédéterminé, à une distance angulaire prédéterminée par rapport à l'origine (O).

**Patentansprüche**

**1.** Vorrichtung (10) zur magnetischen Messung der Winkelposition eines Referenzpunkts (P), der winkelmäßig um eine Achse (Z) in Bezug auf einen festen Ursprungspunkt (O) beweglich ist, umfassend:

- eine Trägerscheibe (12), die den Referenzpunkt (P) trägt, wobei die Trägerscheibe (12) um die Achse (Z) drehbeweglich ist,
- mindestens ein erstes Magnetelement (16), das mit der Trägerscheibe (12) verbunden ist, und
- einen ersten Winkelpositionssensor (14), der mit dem ersten Magnetelement (16) zusammenarbeitet, um eine angenäherte Winkelposition ($\theta_a$) des Referenzpunkts (P) in Bezug auf den Ursprungspunkt (O) zu messen,
**dadurch gekennzeichnet, dass** sie umfasst:
- eine zweite Anordnung (20) von zweiten Magnetelementen (20), die umfangsmäßig auf dem Umfang der Trägerscheibe (12) angeordnet sind, wobei jedes zweite Magnetelement (22) sich winkelmäßig zwischen einem stromaufwärts gelegenen Ende (22A) und einem stromabwärts gelegenen Ende (22B) erstreckt,
- mindestens einen zweiten Magnetsensor (18), der im Ursprungspunkt (O) angeordnet ist und mit der zweiten Anordnung (20) zusammenarbeitet, um für ein zweites Magnetelement (22), das gegenüber diesem zweiten Sensor (18) angeordnet ist, einen Inkrementalwert entsprechend der Winkelposition des stromaufwärts gelegenen Endes (22A) dieses zweiten Magnetelements (22) in Bezug auf den Ursprungspunkt (O) zu messen,
- Mittel (26) zur Bestimmung, welches zweite Magnetelement (22) von denen der zweiten Anordnung (20) gegenüber dem zweiten Sensor (18) in Abhängigkeit von der angenäherten Winkelposition ($\theta_a$) liegt, die von dem ersten Sensor (14) gemessen wird, und
- Mittel (30) zu Berechnung einer genauen Winkelposition ($\theta$) des Referenzpunkts (P) abhängig vom zweiten Magnetelement (22), das von den Bestimmungsmitteln bestimmt wird, und dem von dem zweiten Sensor (18) gemessenen Inkrementalwert.

**2.** Messvorrichtung (10) nach Anspruch 1, bei der das erste Magnetelement (16) eine ringförmige Magnetscheibe mit zwei Magnetpolen ist, die auf der Trägerscheibe (12) koaxial zu dieser Trägerscheibe (12) befestigt ist, wobei sie radial zwischen der Achse (Z) und der zweiten Anordnung (20) von zweiten Magnetelementen (22) angeordnet ist.

**3.** Messvorrichtung (10) nach Anspruch 1 oder 2, bei der der erste Sensor (14) ein 360°-Hall-Winkelsensor ist.

**4.** Messvorrichtung (10) nach Anspruch 1 oder 2, bei der der erste Sensor (14) vier Hall-Zellen (14A, 14B) aufweist, von denen zwei Zellen (14A) mit dem Ursprungspunkt (O) entlang einer ersten Achse (X) ausgerichtet sind und zwei Zellen (14B) entlang einer zweiten Achse (Y) senkrecht zur ersten Achse (X) ausgerichtet sind, wobei die Hall-Zellen die senkrechte Komponente des Magnetfeldes messen, das von dem ersten Magnetelement (16) erzeugt wird.

**5.** Messvorrichtung (10) nach Anspruch 1 oder 2, bei der der erste Sensor (14) ein potentiometrischer Positionssensor ist.

**6.** Messvorrichtung (10) nach Anspruch 1 oder 2, bei der der erste Sensor (14) und/oder der zweite Sensor (18) ein Winkelwirbelstromsensor ist, der eine Magnetmessung oder eine elektromagnetische Messung gestattet.

**7.** Messvorrichtung (10) nach einem beliebigen der vorhergehenden Ansprüche, bei der die zweite Anordnung (20) von zweiten Magnetelementen (22) von einer ringförmigen Magnetscheibe gebildet wird, die eine Mehrzahl von Dipolen, beispielsweise 50 Dipole aufweist, wobei jeder Dipol eines der zweiten Magnetelemente (22) bildet.

8. Messvorrichtung (10) nach einem beliebigen der vorhergehenden Ansprüche, bei der der zweite Sensor (18) ein Hall-Magnetsensor ist, der mindestens zwei Hall-Zellen umfasst, die das Magnetfeld messen, das von dem dem zweiten Sensor (18) gegenüberstehenden Magnetelement (22) erzeugt wird.

9. Messvorrichtung (10) nach einem beliebigen der vorhergehenden Ansprüche, bei der:

> - jedes zweite Magnetelement (22) sich über eine vorbestimmte Winkelentfernung (D) zwischen seinem stromaufwärts gelegenen (22A) und seinem stromabwärts gelegenen (22B) Ende erstreckt,
> - jedes zweite Magnetelement (22) einer spezifischen laufenden Nummer zugeordnet ist, wobei das der laufenden Nummer 1 zugeordnete zweite Magnetelement ein stromaufwärts gelegenes Ende aufweist, das den Referenzpunkt (P) trägt, und die laufende Nummer aufeinanderfolgend von einem zweiten Magnetelement zu seinem benachbarten stromabwärts liegenden nächsten Magnetelement inkrementiert wird,
> - die Vorrichtung (10) Mittel (28) zum Speichern eines numerischen Wertes für jede laufende Nummer der Winkelentfernung aufweist, die von dem Referenzpunkt (P) in Bezug auf den Ursprungspunkt (O) durchlaufen wird, wenn das stromaufwärts gelegene Ende (22A) des zweiten Magnetelements (22), das diese laufende Nummer trägt, gegenüberliegend zum Ursprungspunkt (O) angeordnet ist.

10. Messvorrichtung (10) nach einem beliebigen der vorhergehenden Ansprüche, bei der die Genauigkeit des ersten Sensors größer ist als die Hälfte einer vorbestimmten Winkelabmessung (D), über die sich jedes zweite Magnetelement (22) erstreckt.

11. Messvorrichtung (10) nach einem beliebigen der vorhergehenden Ansprüche, Mittel (32) zur Korrektur der Linearität des zweiten Sensors (18) umfassend, die geeignet sind, einen korrigierten Inkrementalwert zu berechnen, der gleich einem von dem zweiten Sensor (18) gemessenen Inkrementalwert, von dem ein Korrekturwert abgezogen wird, ist.

12. Messvorrichtung (10) nach Anspruch 11, bei der die Korrekturmittel (32) für jedes zweite Magnetelement (22) eine Polynomfunktion speichern, die einen Korrekturwert einer Variablen zuordnet, die von dem gemessenen Inkrementalwert gebildet wird.

13. Messvorrichtung (10) nach einem beliebigen der vorhergehenden Ansprüche, eine Mehrzahl von zweiten Sensoren umfassend, wobei jeder Sensor an einem vorbestimmten Punkt in einer vorbestimmten winkelmäßigen Entfernung in Bezug auf den Ursprung (O) angeordnet ist.

**Claims**

1. A measurement device (10) for the magnetic measurement of the angular position of a reference point (P) that is movable angularly about an axis (Z) relative to a fixed point of origin (O), comprising:

> - a support disc (12), bearing the reference point (P), the said support disc (12) being movable in rotation about the said axis (Z);
> - at least one first magnetic element (16) integrally attached to the support disc (12); and
> - a first angular position sensor (14) that cooperates with the first magnetic element (16), in order to measure an approximate angular position ($\theta_a$) of the reference point (P) relative to the point of origin (O);
> **characterised in that** it includes:
> - a second assembly (20) of second magnetic elements (22) arranged circumferentially on the periphery of the support disc (12), each second magnetic element (22) extending angularly between an upstream end (22A) and a downstream end (22B)
> - at least one second magnetic sensor (18) arranged at the point of origin (O), that cooperates with the second assembly (20) in order to measure, for a second magnetic element (22) situated to be facing the said second sensor (18), an increment value corresponding to the angular position of the upstream end (22A) of the second magnetic element (22) relative to the point of origin (O),
> - determination means (26) for determining which second magnetic element (22), among those of the second assembly (20) is situated to be facing the second sensor (18), as a function of the approximate angular position ($\theta_a$), measured by the first sensor (14); and
> - calculation means (30) for calculation of a precise angular position ($\theta$) of the reference point (P), as a function of the second magnetic element (22) determined by the determination means, and the increment value measured by the second sensor (18).

2. A measurement device (10) according to claim 1, wherein the first magnetic element (16) is an annular magnetic disc having two magnetic poles, that is fixed on to the support disc (12), coaxially to the support disc (12), and is arranged radially between the axis (Z) and the second assembly (20) of second magnetic elements (22).

3.  A measurement device (10) according to claim 1 or 2, wherein the first sensor (14) is a 360° Hall effect angle sensor.

4.  A measurement device (10) according to claim 1 or 2, wherein the first sensor (14) comprises of four Hall effect cells (14A, 14B) of which, two cells (14A) are aligned with the point of origin (O) along a first axis (X), and two cells (14B) are aligned along a second axis (Y) that is perpendicular to the first axis (X), the said Hall effect cells measuring the normal component of the magnetic field generated by the first magnetic element (16).

5.  A measurement device (10) according to claim 1 or 2, wherein the first sensor (14) is a potentiometric position sensor.

6.  A measurement device (10) according to claim 1 or 2, wherein the first sensor (14) and/or the second sensor (18) is an Eddy current angle sensor, that is used to perform a magnetic or electromagnetic measurement.

7.  A measurement device (10) according to any one of the preceding claims, wherein the second assembly (20) of second magnetic elements (22) is formed by an annular magnetic disc including a plurality of dipoles, for example 50 dipoles, each dipole forming one of the said second magnetic elements (22).

8.  A measurement device (10) according to any one of the preceding claims, wherein the second sensor (18) is a Hall effect magnetic sensor comprising of at least two Hall effect cells that measure the magnetic field generated by the second magnetic element (22) situated to be facing the second sensor (18).

9.  A measurement device (10) according to any one of the preceding claims, wherein:

    - each second magnetic element (22) extends over a predetermined angular distance (D) between its upstream end (22A) and downstream end (22B),
    - each second magnetic element (22) is associated with a specific sequential order number, the second magnetic element associated with the sequential order number 1 having an upstream end bearing the reference point (P), and with the sequential order number being incremented progressively step by step from one second magnetic element to the adjacent downstream second magnetic element thereof

    - the device (10) comprises the data storage means (28) for storing, for each sequential order number, a numerical value of the angular distance covered by the reference point (P) relative to the point of origin (O) when the upstream end (22A) of the second magnetic element (22) carrying this sequential order number is situated to be facing the point of origin (O).

10. A measurement device (10) according to any one of the preceding claims, wherein each second magnetic element (22) extending over a predetermined angular dimension (D), the precision of the first sensor is greater than half the said predetermined angular dimension (D).

11. A measurement device (10) according to any one of the preceding claims, including the linearity correction means (32) for correcting the linearity of the second sensor (18) capable of calculating a corrected increment value equal to an increment value measured by the second sensor (18), from which a correction value is subtracted.

12. A measurement device (10) according to claim 11, wherein the correction means (32) stores, for each second magnetic element (22), a polynomial function which associates a correction value with a variable consisting of the increment value measured.

13. A measurement device (10) according to any one of the preceding claims, comprising a plurality of second sensors, each disposed at a predetermined point, at a predetermined angular distance relative to the origin (O).

FIG.1

FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5757180 A
- US 20080252286 A